Europäisches Patentamt

European Patent Office

Office européen des brevets

(19)

(11) **EP 1 281 467 A2**

(12) **EUROPEAN PATENT APPLICATION**

(43) Date of publication:
**05.02.2003 Bulletin 2003/06**

(51) Int Cl.⁷: **B23K 9/04**

(21) Application number: **02254988.5**

(22) Date of filing: **16.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **01.08.2001 GB 0118729**

(71) Applicant: **ROLLS-ROYCE plc**
**London, SW1E 6AT (GB)**

(72) Inventors:
• **Wright, Iain William**
**Darley Abbey, Derby DE22 1DN (GB)**
• **Jones, Steven Alan**
**Hilton, Derby DE65 5HN (GB)**

(74) Representative: **Gunn, Michael Alan**
**Rolls-Royce plc**
**P.O. Box 31**
**Derby DE24 8BJ (GB)**

(54) **Apparatus and method for forming a body**

(57)    An apparatus for forming a component, for example for an aerospace engine, includes a welding head 12 which supplies a weld material 24 to be deposited on a substrate 56 in order to build up the component. A flow of current is provided between the welding head 12 and the substrate 56 thereby melting the weld material and forming a molten weld pool in the substrate. A coil 50 is located above the weld pool and is provided with an alternating current thereby inducing an alternating magnetic field in the region of the weld pool to exert a force upon the molten substrate of the weld pool. This improves the crystal structure and therefore the properties of the resulting component.

**EP 1 281 467 A2**

## Description

This invention relates to an apparatus and method for forming a body by deposition of a weld material.

The formation of components for aerospace engines can be carried out by any of several techniques involving deposition of a weld material. These techniques utilise an apparatus including two electrodes, the first electrode being held in a welding head to which is fed a supply of a metal wire constituting the weld material. The second electrode is in the form of a substrate or foundation upon which the weld material is to be deposited to form the component. The foundation may be in the form of a metal plate. A supply of an inert gas is fed to the welding head during its operation.

When the welding head and the foundation are connected to a supply of electricity, an arc is formed in the inert gas which melts the metal wire and a small region of the material forming the foundation. The metal is then deposited onto the foundation in a controlled manner. The welding head is mounted on a robotic arm and the foundation is mounted on a movable turntable. By controlling the movement of the arm and the turntable, the metal can be deposited on the foundation in order to form components of any desired shape.

One such method of forming components involves providing the welding head with a permanent electrode and also providing a separate metal wire to the welding head, the metal wire constituting the weld material. This method is generally known in the art as tungsten inert gas welding which is generally shortened to TIG welding. Although tungsten is commonly used, it will be appreciated by those skilled in the art that other suitable materials could be used as the electrode.

Another such method involves the use of a sacrificial electrode in the welding head. With this arrangement, the metal wire which provides the weld material also constitutes the electrode and is fed through the welding head. This method is generally known in the art as metal inert gas welding, which is generally shortened to MIG welding.

According to the invention there is provided apparatus for forming a body by the deposition of a weld material, the apparatus including:

> a welding head;
> a support member on which the body is to be deposited;
> means for supplying a weld material to be deposited;
> means for providing a flow of current between the welding head and a substrate in the form of the support member or the partially formed body, thereby melting the weld material and forming a molten weld pool in the substrate; means for manipulating the position of the welding head relative to the support member such that the body is built up layer by layer by the deposition of the weld material, and
means for providing a magnetic field in the region of the weld pool, to exert a force upon the molten substrate of the weld pool.

Preferably the means for supplying a weld material to be deposited includes holding means associated with the welding head. Preferably the holding means includes means for holding an end of a wire of weld material in a region between the welding head and the substrate.

Preferably the means for providing a magnetic field include means for inducing a force which causes rotation of the molten substrate of the weld pool.

The means for providing a magnetic field may include means for providing an alternating magnetic field.

The means for providing a magnetic field may include a current carrying coil and means for providing a current to the coil. These means may include means for providing an alternating current to the coil, which may be a square wave alternating current.

The coil may be generally cylindrical and may be located generally above the weld pool. The axis of the cylindrical coil may be aligned generally with a central region of the weld pool.

According to a further aspect of the invention there is provided a method for forming a body by the deposition of a weld material, the method including the steps of:

> providing a welding head;
> providing a support member on which the weld material is to be deposited;
> supplying a weld material to be deposited;
> providing a flow of current between the welding head and a substrate in the form of the support member or the partially formed body, thereby melting the weld material and forming a molten weld pool in the substrate; manipulating the position of the welding head relative to the support member such that the body is built up layer by layer by the deposition of the welding material; and
> providing a magnetic field in the region of the weld pool to exert a force upon the molten substrate of the weld pool.

Preferably an end of a wire of welding material is supplied to a region between the welding head and the substrate.

Preferably the force causes rotation of the molten substrate.

The magnetic field may be an alternating magnetic field for causing rotation of the substrate consecutively in opposite directions.

The method may include the step of providing a current carrying coil and supplying current to the coil in order to provide the magnetic field. The current may be alternating current and is preferably square wave alternating current.

Preferably the current flowing between the welding head and the substrate is direct current.

The weld material may be a titanium alloy, for example titanium 6/4, which includes 6% aluminium and 4% vanadium.

An embodiment of the invention will now be described by way of example only with reference to the accompanying drawings in which:

Fig. 1 is a diagrammatic side view of an apparatus for forming a body;
Fig. 2 is an enlarged diagrammatic side view of a welding head for use with the apparatus of Fig. 1, illustrating the invention; and
Fig. 3A is a side view similar to that of Fig. 2 but diagrammatically illustrating the current and magnetic field; and
Fig. 3B is a diagrammatic plan view of the weld pool of Fig. 3A.

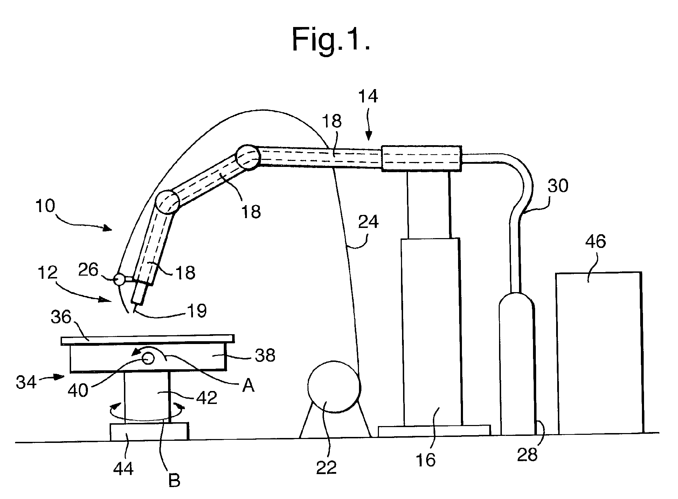

Referring to Fig. 1, there is shown an apparatus 10 for forming a body by deposition of a weld material. The apparatus 10 includes an arc welding head 12, mounted on a free end of a support mechanism in the form of a robot arm 14. The robot arm 14 includes a base member 16 on which are pivotally mounted a plurality of sections 18 which are rotatable relative to one another and about their own axes so that the welding head 12 can be manipulated to any desired position. The welding head 12 includes a first electrode 19.

A supply of a metal wire 24 is provided, in the form of a reel 22 around which the wire 24 is wound. The metal is in the form of a titanium alloy, for example titanium 6/4 which includes 6% aluminium and 4% vanadium. The wire 24 is fed from the reel 22 to the welding head 12 such that an end of the wire 24 is held just below the tip of the welding head 12. The wire 24 is held in place by suitable holding means 26.

The apparatus 10 also includes a supply of an inert gas, stored in a cylinder 28. A pipe 30 leads from the cylinder 28 to the welding head 12 through the sections 18. The gas is any suitable inert gas or gases or combinations of inert and active gases, for example argon or argon/carbon dioxide, and provides the medium in which an arc is formed, as will be explained below.

Support means 34 is provided beneath the welding head 12 and includes a turntable 36 mounted upon a platform 38. The platform 38 is pivotally mounted as indicated by the arrow A, by pivot 40, to a pedestal 42 which in turn is rotatably mounted, as indicated by the arrow B, upon a base member 44.

A support arrangement (not shown in Fig. 1) is mounted onto the turntable 36. The support arrangement includes a support member which provides a substrate upon which the material of the wire 24 is deposited to form the body. The support member constitutes a second electrode, the function of which is described in more detail below.

Control means in the form of a computer 46 controls the movement of the support means 34 and the robot arm 14, as well as controlling the supply of the inert gas, and the supply of the metal wire 24.

In operation, the turntable 36 and the welding head 12 are connected to a supply of electricity, and argon is fed via the pipe 30 from the cylinder 28 to the welding head 12 to form an argon shroud around the electrode of the welding head 12. The argon shroud extends to the substrate on which material is to be deposited (i.e. the support member or the part of the body being worked upon). The argon gas is ionised to form a plasma and an arc is created between the first electrode 19 in the welding head 12 and the substrate. The arc produces a high temperature, which is sufficient to melt the material of the substrate in the vicinity of the arc and to melt the end of the wire 24 which is also in the vicinity of the arc. This melted material from the wire 24 and the foundation plate 52 forms a molten weld pool.

The position of the welding head 12 relative to the turntable 36 is controlled by the computer 46 by manipulating both the position of the welding head 12, and the position of the turntable 36. The computer 46 also controls the rate of feeding of the wire 24. Thus, by appropriate manipulation of the

welding head 12 relative to the turntable 36, a component, for example for use in a gas turbine engine, can be built up layer by layer by the deposition of the weld material from the wire 24. As will be appreciated when the body is partially formed, the welding head 12 deposits material on the body rather than the support member. In this case, the shroud extends from the welding head 12 to the part of the body being formed and the arc is created between the welding head 12 and the body. The term "substrate" is intended to cover either the support member or the body as appropriate.

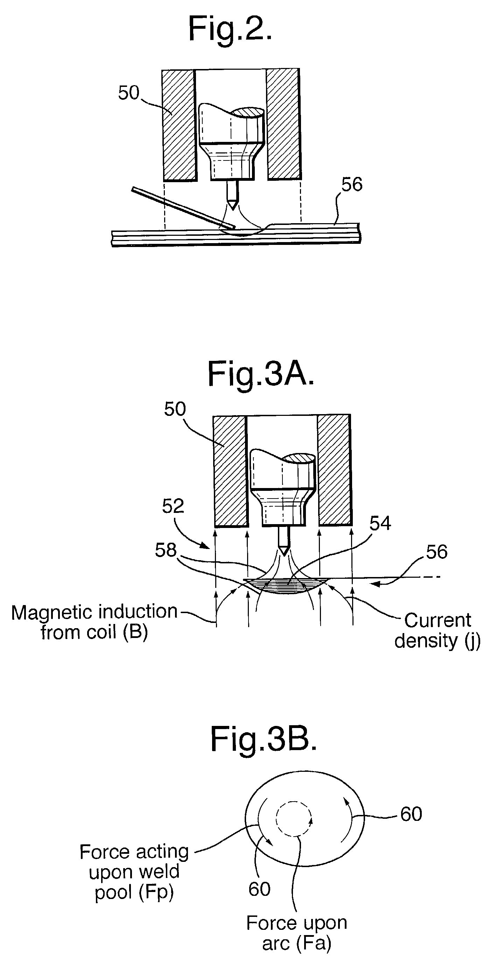

Referring to Figs. 2, 3A and 3B, apparatus according to the invention includes a generally cylindrical conducting coil 50 through which current may be passed to induce a magnetic field. Magnetic field lines 52 are illustrated in Fig. 3A and it may be seen that they extend generally perpendicularly to a surface of the weld pool 54. The coil 50 is supplied with alternating, square wave current, such that the direction of the magnetic field reverses rapidly. The frequency of the alternating current may be for example 5, 10 or 15 Hertz.

As explained above, a direct current flows between the welding head 12 and the substrate 56. This direct current is represented by the lines 58 in Fig. 3A. It may be seen that the current flows through the weld pool such that it has a component in a direction generally parallel to the surface of the weld pool 54, particularly towards the edges of the weld pool.

The magnetic field in the region of the weld pool 54 and the current flowing therethrough induce a force on the material of the weld pool. The force is de-

fined by the equation:

$$F = B \times J \sin \theta$$

Where B is the magnetic flux density, J is the current density and θ is the angle between the magnetic field lines and the direction of current flow.

Where the direction of current flow and the direction of the magnetic field are aligned, i.e. θ = 0, the above force (the Lorentz force) is zero and no force is exerted on the weld pool. However, where the magnetic field and the current flow are at 90° to one another, the Lorentz force is at a maximum.

At the centre of the weld pool, the current flow and the magnetic fields are generally aligned and no movement is induced. Nearer the edge of the weld pool, θ is greater and a force is exerted on the weld pool which is perpendicular to the lines of magnetic flux and the direction of current flow, i.e. into or out of the page as viewed in Fig. 3A. Fig. 3B is a plan view of the weld pool which illustrates with arrows 60 the force acting on the weld pool.

The direction of the force is always generally parallel to the edge of the weld pool because the current has a component generally outwardly or inwardly through the weld pool. Thus, the overall effect of the force is to induce a rotation of the weld pool.

The edge of the weld pool is defined by the interface between the liquid weld pool and the solid metal surrounding it. The solid cannot rotate and therefore the velocity of rotation at the liquid/solid interface is zero. This causes the rotational velocity to be greatest approximately at a mid-point between the centre of the weld pool and a solid liquid interface, and to decrease towards this interface and towards the centre of the weld pool.

As the direction of the magnetic field is reversed, the direction of rotation of the weld pool is also reversed. Thus a "stirring" effect is induced in the weld pool.

It has been found that the above magnetic stirring has a highly advantageous effect on the welding process.

Alloys with a low percentage solute tend to have narrow solidification fronts i.e. as they are cooled, they pass rapidly through the dentritic, cellular and planar phases. Thus, unless they are cooled very rapidly, they generally result in large grain structures that tend to grow with large aspect ratios, i.e. they are columnar in morphology. This columnar morphology tends to promote anisotropic properties and unfavourable fabrication issues.

Alloys with high percentage solute tend instead to result in the formation of large dentritic structures which are less prone to anisotropy and which therefore do not suffer from the above problems. However, due to the high alloy content associated with certain nickel based alloys and the cooling rates involved during the welding process, the material can become highly crack sensitive due to the formation of deleterious phases. These deleterious phases tend to migrate to the grain boundaries because dissolved elements pass more easily through the liquid than the solid. Therefore the material tends to be very solute rich at the boundary point between the solid and the liquid. This can result particularly in deleterious phases at the centre line of the weld, resulting in hot cracking i.e. the rupturing of the weld as it cools.

Electromagnetic stirring has an advantageous effect on many of the above problems. It tends to increase the size of the weld pool but to reduce its power density and reduce the temperature gradient within the weld pool. This tends to allow secondary dendrites to form more easily within the crystal structure. In addition, the stirring effect results in dendrites and fragments of solidifying material from the solid liquid interface being "thrown" into the centre of the weld pool. These alter the thermal gradient within the weld pool and tend to result in the formation of a more advantageous grain structure.

There is thus provided an apparatus and method for forming a body in which the body is built up with an improved grain structure. The method tends to supress historic problems in the structure and result in a component which is stronger and more stable than was the case with the prior art.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. Apparatus (10) for forming a body by the deposition of a weld material, the apparatus including:

     a welding head (12);
     a support member on which the body is to be deposited;
     means (22,24) for supplying a weld material to be deposited;
     means for providing a flow of current between the welding head (12) and a substrate (56) in the form of the support member or the partially formed body, thereby melting the weld material and forming a molten weld pool (54) in the substrate (56); means (46) for manipulating the position of the welding head (12) relative to the support member such that the body is built up layer by layer by the deposition of the weld material, **characterised by**

means (50) for providing a magnetic field (52) in the region of the weld pool (54), to exert a force (60) upon the molten substrate (56) of the weld pool (54).

2. Apparatus according to claim 1, wherein the means (50) for providing a magnetic field (52) include means for inducing a force (60) which causes rotation of the molten substrate (56) of the weld pool (54).

3. Apparatus according to claim 2, wherein the means (50) for providing a magnetic field (52) includes means for providing an alternating magnetic field.

4. Apparatus according to any preceding claim, wherein the means (50) for providing a magnetic field (52) includes a current carrying coil (50) and means for providing a current to the coil (50).

5. Apparatus according to claim 4, wherein the means for providing current to the coil (50) includes means for providing an alternating current to the coil (50).

6. Apparatus according to claim 4 or claim 5, wherein the coil (50) is substantially cylindrical and is located substantially above the weld pool (54).

7. Apparatus according to claim 6, wherein the axis of the cylindrical coil (50) is aligned generally with a central region of the weld pool (54).

8. A method for forming a body by the deposition of a weld material, the method including the steps of:

> providing a welding head (12);
> providing a support member on which the weld material is to be deposited;
> supplying (22,24) a weld material to be deposited;
> providing a flow of current between the welding head (12) and a substrate (56) in the form of the support member or the partially formed body, thereby melting the weld material and forming a molten weld pool (54) in the substrate (56); manipulating the position of the welding head (12) relative to the support member such that the body is built up layer by layer by the deposition of the weld material, **characterised by**
> providing a magnetic field (52) in the region of the weld pool (54) to exert a force (60) upon the molten substrate (56) of the weld pool (54).

9. A method according to claim 8, wherein the force (60) causes rotation of the molten substrate (56).

10. A method according to claim 8 or claim 9, wherein the magnetic field (52) is an alternating magnetic field for causing rotation of the molten substrate (56) consecutively in opposite directions.

11. A method according to any of claims 8 to 10, wherein the method includes the step of providing a current carrying coil (50) and supplying current to the coil (50) in order to provide the magnetic field (52).

12. A method according to claim 11, wherein the current is an alternating current.

13. A method according to any of claims 8 to 12, wherein the current flowing between the welding head (12) and the substrate (56) is direct current.

14. A method according to any of claims 8 to 13, wherein the weld material (22) is titanium alloy.

15. A method according to any of claims 8 to 13, wherein the weld material (22) is nickel alloy.

16. A component for a gas turbine engine, the component being manufactured by a method according to any of claims 8 to 15.

# Fig.1.

# Fig.2.

# Fig.3A.

Magnetic induction from coil (B)

Current density (j)

# Fig.3B.

Force acting upon weld pool (Fp)

Force upon arc (Fa)